**Europäisches Patentamt**

**European Patent Office**

**Office européen des brevets**

(19)

(11) Numéro de publication: **0 196 948 B1**

(12) **FASCICULE DE BREVET EUROPEEN**

(45) Date de publication du fascicule du brevet:
**03.10.90**

(51) Int. Cl.⁵: **H04J 14/02**, H04B 10/02, G02B 6/34, G02B 6/12

(21) Numéro de dépôt: **86400499.9**

(22) Date de dépôt: **10.03.86**

(54) **Dispositif réversible de démultiplexage de plusieurs signaux lumineux en optique intégrée.**

(30) Priorité: **13.03.85 FR 8503681**

(43) Date de publication de la demande:
**08.10.86 Bulletin 86/41**

(45) Mention de la délivrance du brevet:
**03.10.90 Bulletin 90/40**

(84) Etats contractants désignés:
**CH DE GB IT LI NL**

(56) Documents cités:
**GB-A- 2 105 863**

**APPLIED PHYSICS LETTERS,
vol. 40, no. 2, janvier 1982, pages 120-122, American
Institute of Physics, New York, US; T. SUHARA et al.:
"Monolithic Integrated microgratings and photodiodes
for wavelength demultiplexing"
SOVIET PHYSICS TECHNICAL PHYSICS,
vol. 26, no. 6, juin 1981, pages 690-692, American
Institute of Physics, New York, US; Yu.A. BYKOVSKII et
al.: "Terminal for a fiber-optics communications link
with closely spaced channels"**

(73) Titulaire: **COMMISSARIAT A L'ENERGIE ATOMIQUE,
31/33, rue de la Fédération, F-75015 Paris(FR)**

(72) Inventeur: **Lizet, Jacques, 35, Avenue Rhin et Danube,
F-38100 Grenoble(FR)**
Inventeur: **Valette, Serge, 41, rue des Eaux Claires,
F-38100 Grenoble(FR)**

(74) Mandataire: **Mongrédien, André et al, c/o
BREVATOME 25, rue de Ponthieu, F-75008 Paris(FR)**

## Description

La présente invention a pour objet un dispositif servant à multiplexer ou démultiplexer plusieurs signaux lumineux en optique intégrée. Elle trouve une application notamment dans les domaines des traitements de signaux radars en temps réel, des télécommunications par voie optique, des capteurs à fibre optique, etc...

Le multiplexage de signaux lumineux de longueurs d'onde différentes, en optique intégrée, est un point important dans les télécommunications optiques puisqu'il permet de transporter dans une même fibre optique une grande quantité d'informations à bandes passantes constantes.

Un dispositif de démultiplexage ou un démultiplexeur, en optique intégrée, est un dispositif qui permet de séparer n signaux lumineux de longueurs d'onde différentes transportés par une même première fibre optique et de réinjecter respectivement dans n secondes fibres optiques lesdits n signaux lumineux. Inversement un dispositif de multiplexage ou multiplexeur est un dispositif qui permet de regrouper en un seul faisceau, n signaux lumineux de longueurs d'onde différentes issues respectivement de n fibres optiques.

Dans de tels dispositifs, deux problèmes importants se posent. Le premier problème est d'assurer la fonction multiplexeur, c'est-à-dire qu'en sortie du dispositif la ième seconde fibre optique, i étant un entier allant de 1 à n, ne doit transporter que la longueur d'onde $\lambda_i$ à $\Delta\lambda/2$ près. L'élément de multiplexage idéal est donc un filtre créneau, de largeur $\pm \Delta\lambda/2$ et de transmission 1 si $\lambda_i-\Delta\lambda/2 < \lambda < \lambda_i+\Delta\lambda/2$, qui réfléchirait ou au contraire transmettrait parfaitement les signaux lumineux dont les longueurs d'onde ne sont pas comprises dans cet intervalle et inversement transmettrait ou réfléchirait ceux dont les longueurs d'onde sont comprises dans cet intervalle. Une succession de tels filtres constituerait un dispositif de multiplexage idéal.

Le deuxième problème important est le couplage du dispositif de multiplexage avec les fibres optiques généralement monomodes, transportant les informations lumineuses. En effet, les pertes lumineuses à l'entrée et à la sortie du dispositif de multiplexage doivent être les plus faibles possibles.

Dans les dispositifs de multiplexage actuellement connus en optique intégrée la fonction multiplexeur, c'est-à-dire la dispersion chromatique des différents signaux lumineux est assurée par un réseau, comme en optique classique. Un tel dispositif de multiplexage est notamment décrit dans un article de Applied Optics, vol. 21, n° 12, du 15 juin 1982, pages 2195 à 2198 de T. SUHARA et al. intitulé "Integrated-Optic wavelength multi- and demultiplexers using a chirped grating and an ion-exchanged waveguide".

Malheureusement, ces dispositifs de multiplexage ne résolvent pas le problème le plus important concernant le couplage du multiplexeur et des fibres optiques monomodes utilisées pour le transport des informations lumineuses ainsi que celui de la collimation du faisceau lumineux qui attaque l'élément dispersif ou réseau du dispositif de multiplexage.

Il est par ailleurs connu par le document Appl. Phys. Lett., vol. 40, n° 2 du 15 janvier 1982, p. 120–122, T. SUHARA et al. d'utiliser un guide d'onde comportant une pluralité de réseaux disposés en cascade et travaillant en régime de Bragg pour séparer des signaux de longueurs d'ondes différentes. En outre, ce document mentionne l'utilisation d'une lentille de Fresnel pour collimater le faisceau lumineux sortant d'une fibre optique juxtaposée au guide d'onde. Les signaux lumineux sont ensuite détectés par des photodiodes intégrées sur le substrat supportant le guide d'onde.

La présente invention a justement pour objet un dispositif de démultiplexage réversible de plusieurs signaux lumineux en optique intégrée permettant de remédier aux différents inconvénients donnés ci-dessus. En particulier, il permet un bon couplage avec les fibres optiques utilisées pour le transport des informations et donc de faibles pertes de lumière.

De plus, il permet, de façon plus aisée que les dispositifs de l'art antérieur, le multiplexage de plusieurs signaux lumineux de longueurs d'onde différentes, par exemple jusqu'à huit signaux, tout en conservant des pertes totales lumineuses acceptables. Par ailleurs, le dispositif de multiplexage ou de démultiplexage de l'invention peut être réalisé selon une technologie parfaitement reproductible.

La présente invention a justement pour objet un dispositif de démultiplexage intégré servant à séparer n signaux lumineux de longueurs d'onde différentes, constituant un faisceau lumineux incident transporté par une première fibre optique, et à réinjecter respectivement dans n secondes fibres optiques les n signaux lumineux, tel que défini dans la revendication 1 ou dans la revendication 6.

Le dispositif selon l'invention est réversible, c'est-à-dire qu'il permet soit le démultiplexage, soit le multiplexage de signaux lumineux. Dans le sens multiplexage, le dispositif sert à injecter dans la première fibre un faisceau lumineux sortant, contenant n signaux lumineux issus respectivement de n secondes fibres optiques. Dans ce cas, l'optique d'entrée joue le rôle d'optique de sortie; les réseaux servent à combiner deux faisceaux lumineux et les n optiques de sorties jouent le rôle de n optiques d'entrée.

Dans la suite du texte le dispositif selon l'invention sera décrit dans le sens démultiplexage.

L'optique d'entrée achromatique, qui est un miroir parabolique, assure la collimation du faisceau lumineux devant être traité dans le dispositif de multiplexage. Il permet ainsi aux réseaux de travailler en régime de Bragg et donc d'assurer une bonne sélection en longueur d'onde.

Selon un mode préféré de réalisation du dispositif de l'invention, la partie ne transportant que l'un des n signaux lumineux est la partie du faisceau lumineux diffracté par le réseau correspondant.

Par ailleurs, le dispositif selon l'invention comprend un microguide d'entrée, intercalé entre la première fibre optique et l'optique d'entrée, ayant une structure voisine de celle de la première fibre optique et/ou des microguides de sortie, intercalés respectivement entre les n optiques de sortie et les n secondes fibres optiques, ayant respectivement une structure voisine de celles des secondes fibres optiques.

L'utilisation d'un microguide d'entrée et de n microguides de sortie, ayant une structure très voisine de celle respectivement des fibres optiques d'entrée et de sortie, permet d'assurer un bon couplage entre ces fibres et le dispositif de multiplexage, limitant ainsi les pertes lumineuses à l'entrée et à la sortie du dispositif. De préférence, les microguides de sortie du dispositif de multiplexage sont courbes.

Selon l'invention, les optiques de sortie du dispositif sont des miroirs paraboliques achromatiques; ces miroirs permettent une bonne focalisation des faisceaux lumineux entrant respectivement dans les différentes secondes fibres optiques.

Selon un mode préféré de réalisation du dispositif de l'invention, les composants optiques sont formés dans deux guides de lumière superposés, un guide inférieur de forte variation d'indice et un guide supérieur de plus faible variation d'indice dans lequel se propage le faisceau lumineux incident. Dans une telle structure, le dispositif de multiplexage comprend n premiers réseaux servant chacun à diffracter une première partie du faisceau lumineux et à transmettre une seconde partie dudit faisceau lumineux, l'une des deux parties ne transportant que l'un des n signaux lumineux, l'autre partie transportant les autres signaux lumineux, étant envoyée en direction du premier réseau suivant, la partie ne transportant que l'un des n signaux lumineux étant alors transférée du guide supérieur au guide inférieur, ainsi que n seconds réseaux associés auxdits premiers servant chacun à retransférer la partie du faisceau lumineux ne transportant que l'un des n signaux lumineux du guide inférieur au guide supérieur.

L'utilisation de deux guides de lumière superposés permet, si nécessaire, de traiter les signaux lumineux lors de leur propagation dans le guide de lumière à forte variation d'indice.

De façon avantageuse, les éléments optiques du dispositif de multiplexage sont formés par gravure d'au moins une partie du guide de lumière.

Selon un autre mode préféré de réalisation du dispositif de l'invention, le guide de lumière comprend, réalisées dans l'ordre sur un substrat en silicium, une première couche d'oxyde de silicium non dopé, une seconde couche d'oxyde de silicium dopé et une troisième couche d'oxyde de silicium éventuellement dopé avec un élément diminuant l'indice de réfraction de cette troisième couche, le dopage du matériau de la seconde couche étant tel que son indice de réfraction est supérieur à celui des première et troisième couches.

Selon un autre mode préféré de réalisation du dispositif de l'invention, les deux guides de lumière comprennent, réalisées dans l'ordre sur un substrat semiconducteur notamment en silicium, une première couche par exemple d'oxyde de silicium non dopé, une seconde couche notamment de nitrure de silicium, une troisième couche par exemple d'oxyde de silicium dopé et une quatrième couche notamment d'oxyde de silicium éventuellement dopé avec un élément diminuant l'indice de réfraction de cette quatrième couche, la troisième couche étant telle que son indice de réfraction est supérieur à celui des première et quatrième couches et inférieur à celui de la seconde couche, les première, seconde et troisième couches formant le guide de lumière inférieur et les première, troisième et quatrième couches formant le guide de lumière supérieur.

D'autres caractéristiques et avantages de l'invention ressortiront mieux de la description qui va suivre, donnée à titre illustratif et non limitatif, en référence aux figures annexées, dans lesquelles :

- la figure 1 représente schématiquement, en perspective, un dispositif de multiplexage conformément à l'invention réalisé dans un seul guide de lumière,
- la figure 2 représente schématiquement, en vue de dessus, le dispositif de multiplexage de la figure 1,
la figure 3 représente schématiquement l'élément d'entrée du dispositif de la figure 1 assurant la collimation du faisceau lumineux à traiter,
- les figures 4a et 4b représentent respectivement, en coupe longitudinale, deux structures possibles pour le réseau du dispositif de multiplexage conformément à l'invention, et
- la figure 5 représente schématiquement, en vue de dessus, un dispositif de multiplexage conformément à l'invention réalisé dans deux guides de lumière superposés.

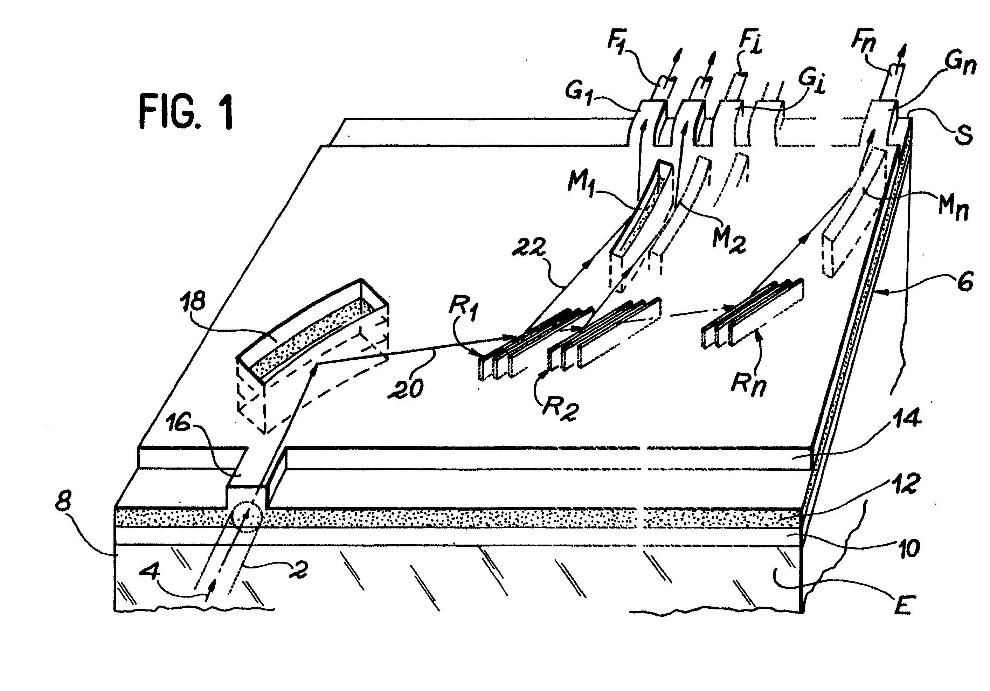

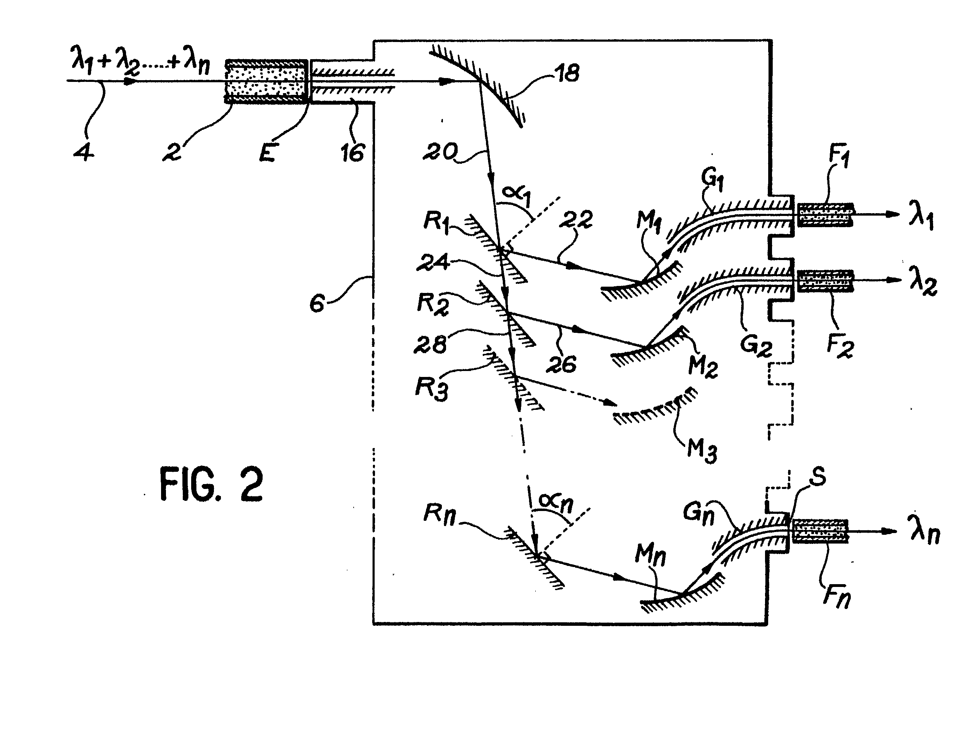

Sur les figures 1 et 2, on a représenté schématiquement un dispositif de multiplexage intégré selon l'invention servant à séparer n signaux lumineux, respectivement de longueurs d'onde $\lambda_1$, $\lambda_2$,..., $\lambda_n$, transportés par une première fibre optique 2, notamment en silice, et à réinjecter respectivement dans n secondes fibres optiques $F_1$, $F_2$,... Fn, les n signaux lumineux. En particulier, la fibre optique $F_1$ ne reçoit que le signal lumineux de longueur d'onde $\lambda_1$,... et la fibre optique Fn ne reçoit que le signal lumineux de longueur d'onde $\lambda_n$. Les longueurs d'onde $\lambda_1$, $\lambda_2$,..., $\lambda_n$ peuvent être comprises entre 0,7 µm et 1,8 µm. Les n signaux lumineux transportés par la première fibre optique 2 forment un unique faisceau lumineux incident 4.

Ce dispositif de multiplexage comprend, comme représenté sur la figure 1, un guide de lumière 6 réalisé sur un substrat semiconducteur monocristallin 8 par exemple en silicium ou formé de matériau III-V tel que le GaAs. Le substrat est obtenu par clivage d'un bloc semiconducteur afin de présenter des faces E et S rigoureusement parallèles.

Le guide de lumière 6 est constitué de trois couches superposées respectivement 10, 12 et 14. La couche 12, intercalée entre les couches 10 et la couche 14, constitue la couche guidante du guide. Elle présente un indice de réfraction supérieur à celui des couches 10 et 14. Par exemple, la couche inférieure 10 surmontant le substrat 8 est réalisée en oxyde de silicium pur, la couche 12 en oxyde de silicium dopé notamment au phosphore, au germanium ou au titane, et la couche supérieure 14 en oxyde de silicium pur ou dopé avec un élément tel que le bore ou le fluor, diminuant l'indice de réfraction de ladite couche. Les couches d'oxyde pur 10 et 14 présentent, pour une même longueur d'environ 0,8 μm, un indice de réfraction par exemple de 1,45 pour de l'oxyde pur et la couche d'oxyde dopé 12 un indice de 1,46. Ce guide de lumière à faible variation d'indice présente des caractéristiques voisines de celles des fibres optiques monomodes en silice généralement utilisées en optique intégrée ; sa faible variation d'indice permet de rester monomode même pour une couche guidante 12 de 10 μm.

Dans ce guide de lumière 6, sont intégrés les différents composants optiques du dispositif de multiplexage.

Le dispositif de multiplexage comprend à son entrée E un microguide 16, permettant d'assurer un bon couplage entre la première fibre optique 2 transportant les signaux lumineux de longueurs d'onde différentes et le dispositif de multiplexage. Ce microguide 16 d'entrée présente une structure très voisine de celle constituant la fibre optique 2 qui est notamment une fibre monomode réalisée en silice ou oxyde de silicium. Ce microguide 16, comme représenté sur la figure 2, est de préférence un microguide rectiligne.

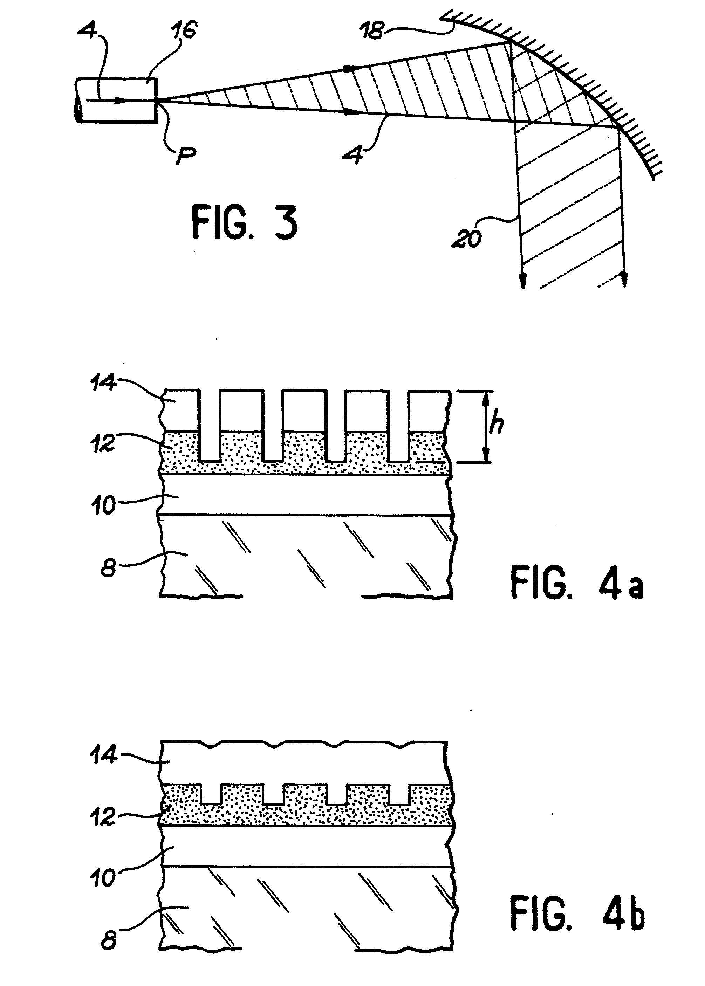

Une optique achromatique 18 telle qu'un miroir achromatique de forme parabolique permet de collimater le faisceau lumineux 4, issu du microguide d'entrée 16 et contenant les signaux lumineux de longueurs d'onde différentes. Autrement dit, cette optique 18 permet de transformer, comme représenté sur la figure 3, la lumière sortant du microguide 16 assimilée à un point lumineux P en un faisceau de lumière parallèle 20 ; pour ce faire, le point lumineux P doit être situé au foyer de l'optique 18.

Le faisceau de lumière parallèle 20 issu du miroir parabolique 18, comme représenté sur la figure 2, attaque n réseaux $R_1$, $R_2$,..., $R_n$ disposés en cascade et travaillant en régime de Bragg. Ces réseaux sont des structures périodiques ; ils comportent, sous forme de bandes parallèles régulièrement espacées, une alternance de creux et de bosses (figure 4a).

Le premier réseau $R_1$ permet par exemple de diffracter la partie du faisceau lumineux 22 transportant le signal lumineux ayant la longueur d'onde $\lambda_1$, et de transmettre le reste 24 du faisceau lumineux, contenant les autres signaux lumineux. La partie 24 du faisceau incident 20 transmise par le premier réseau $R_1$ est reçue par le second réseau $R_2$. Ce dernier diffracte à son tour la partie 26 du faisceau lumineux 24 contenant le signal optique de longueur d'onde $\lambda_2$ et transmet le reste 28 du signal lumineux 24, sur le troisième réseau $R_3$. Ainsi de suite, les n signaux lumineux de longueurs d'onde différentes respectivement $\lambda_1$, $\lambda_2$,..., $\lambda_n$ sont séparés les uns des autres et envoyés vers les fibres optiques $F_1$, $F_2$,..., $F_n$ correspondantes.

L'angle de Bragg ou d'attaque $\alpha_i$ du réseau $R_i$, i étant un entier allant de 1 à n, repéré par rapport à la normale audit réseau, est choisi en fonction des possibilités de réalisation technologique de la structure des différents réseaux. Cet angle $\alpha_i$ dépend de la longueur d'onde $\lambda_i$ à diffracter ainsi que du pas du réseau $p_i$ correspondant. En particulier, le ième réseau $R_i$ peut être déterminé de façon qu'il réfléchisse la longueur d'onde $\lambda_i$ et transmette les autres. Pour cela, il faut que $\lambda_i = 2p_i \sin\alpha_i$. Cette condition peut être réalisée en choisissant le pas $p_i$ du réseau $R_i$ et en faisant varier $\alpha_i$ pour effectuer la sélection en longueur d'onde ou bien garder $\alpha_i$ constant et faire varier le pas $p_i$ du réseau. Pour des raisons pratiques de réalisation des différents réseaux $R_1$, $R_2$,..., $R_n$, il est préférable de fixer le pas $p_i$ et de faire varier $\alpha_i$.

Après les réseaux $R_1$, $R_2$,..., $R_n$, les faisceaux lumineux diffractés, tels que 22 et 26, ne sont plus rigoureusement des faisceaux parallèles. Or, comme tous ces faisceaux doivent sortir perpendiculairement à une face clivée du substrat en silicium 8, c'est-à-dire parallèlement ou perpendiculairement à la face d'entrée E du guide de lumière, par exemple la face parallèle S, n éléments optiques $M_1$, $M_2$,..., $M_n$ sont prévus pour focaliser les faisceaux lumineux diffractés par les différents réseaux. Chaque miroir $M_i$ est associé à un réseau $R_i$ et il permet de focaliser la partie du faisceau lumineux diffractée par ce réseau $R_i$.

De façon à améliorer le couplage en sortie du dispositif de multiplexage avec les différentes fibres optiques $F_1$, $F_2$,... $F_n$, n microguides de lumière respectivement $G_1$, $G_2$,..., $G_n$ sont intercalés respectivement entre les miroirs $M_1$, $M_2$,..., $M_n$ et les fibres optiques $F_1$, $F_2$,..., $F_n$. Chaque microguide $G_i$ présente une structure très voisine de la fibre optique $F_i$ correspondante recevant le signal lumineux de longueur d'onde $\lambda_i$. Comme pour le microguide d'entrée 16 (figure 3) les foyers des éléments optiques $M_1$, $M_2$,..., $M_n$ sont situés juste à l'entrée des microguides $G_1$, $G_2$,..., $G_n$ correspondants.

De préférence, ces microguides présentent une forme courbe, ce qui contribue à faire sortir les différents signaux lumineux diffractés par les réseaux $R_1$, $R_2$,..., $R_n$, transportant respectivement le signal lumineux $\lambda_1$, $\lambda_2$,..., $\lambda_n$, perpendiculairement à la face clivée S du substrat monocristallin 8 de silicium.

On va maintenant décrire un procédé de fabrication du dispositif de multiplexage décrit précédemment, dans le cas d'un substrat en silicium monocristallin et d'un guide de lumière en oxyde de silicium.

La première étape consiste à faire croître par oxydation thermique du substrat la couche inférieure 10 d'oxyde de silicium allant de 1 à 5 μm d'épaisseur. Cette croissance peut être obtenue à basse température entre 800 et 850°C et sous une pression d'environ $10^6$ Pa ou à plus haute température entre 1000°C et 1150°C sous pression atmosphérique.

On dépose ensuite par un procédé de dépôt chimique en phase vapeur, assisté ou non par plasma, la couche 12 d'oxyde de silicium 3 dopé au phosphore, au germanium ou au titane. Cette couche d'oxyde de silicium dopé présente une épaisseur allant de 4 à 10 μm. En jouant sur la quantité de dopant introduit, par exemple de $10^{21}$ à $10^{22}$ atomes/cm$^3$ pour le phosphore, on peut adapter la différence d'indice entre la couche dopée 12 et les couches inférieure 10 et supérieure 14 ; une différence d'indice de $10^{-3}$ peut être suffisante.

La troisième couche d'oxyde de silicium peut être déposée par un procédé de dépôt chimique en phase vapeur assisté ou non par plasma. Cette couche 14 peut être en oxyde pur ou dopé avec un élément qui diminue l'indice de réfraction de cette couche, tel que le bore ou le fluor. Cette couche supérieure représente une épaisseur allant de 1 à 6 µm.

Les étapes suivantes consistent à graver le guide de lumière ainsi réalisé, travers un masque approprié, selon les procédés classiques de photolithographie, de façon à former les différents composants optiques.

Afin d'obtenir des éléments optiques de forme parfaitement définie, on utilisera une gravure anisotrope comme par exemple une gravure ionique réactive utilisant comme agent d'attaque du tétrafluorure de carbone ou du trifluorométhane.

Pour former le microguide d'entrée 16 et les microguides de sortie $G_1$, $G_2$,..., $G_n$, on peut uniquement éliminer les parties de la couche supérieure d'oxyde de silicium 14 non en regard de la fibre optique 2 d'amenée des signaux et des fibres optiques $F_1$, $F_2$,..., $F_n$ de sortie desdits signaux, comme représenté sur la figure 1.

Pour former les miroirs paraboliques d'entrée 18 et de sortie $M_1$, $M_2$,..., $M_n$, on peut éliminer, aux emplacements prévus pour ces miroirs, simultanément les trois couches d'oxyde 10, 12 et 14.

Pour ce qui est des réseaux $R_1$, $R_2$,..., $R_n$, on peut éliminer, comme représenté sur la figure 4a, aux emplacements prévus pour lesdits réseaux, la couche supérieure 14 du guide de lumière et partiellement la couche guidante 12. La profondeur des sillons gravés h est déterminée par la bande passante $\Delta\lambda$ désirée qui dépend de la force du réseau. Plus la profondeur h est élevée, plus la sélection en longueur d'onde est fine ($\Delta\lambda$ faible).

Dans une variante du procédé de fabrication du dispositif de l'invention, on ne réalise que le dépôt de la couche inférieure 10 et de la couche guidante 12 du guide de lumière, selon les mêmes techniques de dépôt. Puis, à l'aide d'un masque approprié, défini selon les procédés classiques de photolithographie, on grave partiellement la couche guidante 12, comme représenté sur la figure 4b, afin de former les différents réseaux. Cette gravure est notamment une gravure anisotrope comme une gravure ionique réactive.

Après cette gravure, on dépose sur l'ensemble de la structure une couche d'oxyde de silicium pur, dont l'épaisseur correspond à celle de la couche supérieure 14 du guide de lumière. Ce dépôt peut être réalisé par un procédé de dépôt chimique en phase vapeur assisté par plasma.

Les autres éléments optiques (miroirs, microguides) sont réalisés comme précédemment par gravure d'une ou plusieurs couches du guide de lumière.

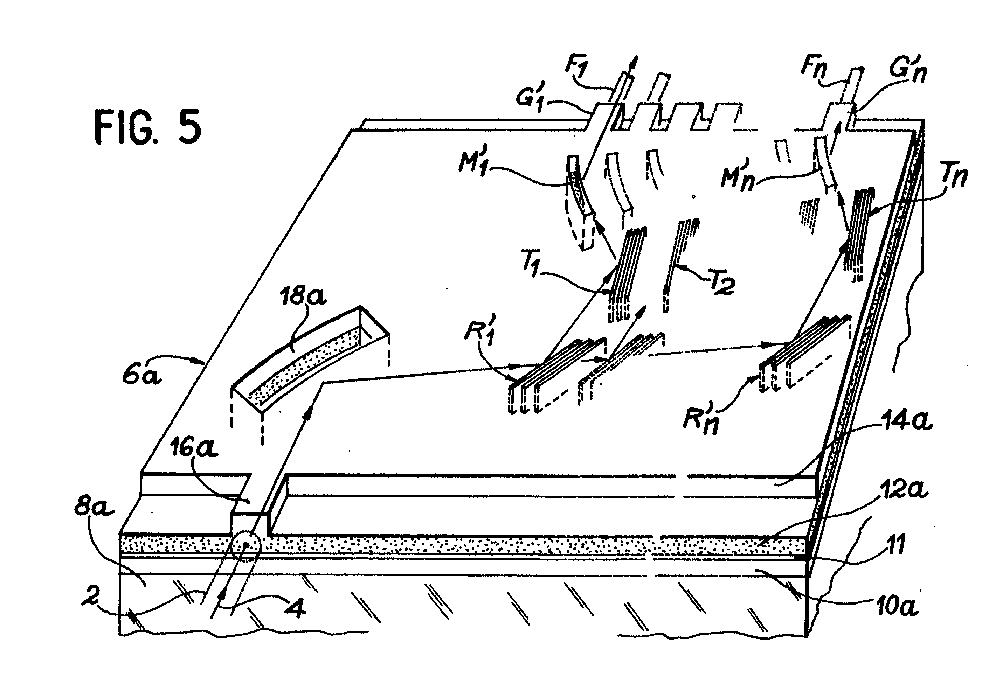

Sur la figure 5, on a représenté en perspective un autre mode de réalisation du dispositif de multiplexage conformément à l'invention. Les éléments optiques de ce dispositif jouant les mêmes rôles que ceux décrits précédemment, en référence aux figures 1 et 2, porteront les mêmes références suivies d'un indice a ou d'un symbole '.

Ce dispositif de multiplexage permet de séparer n signaux lumineux de longueur d'onde $\lambda_1$, $\lambda_2$,..., $\lambda_n$ transportés par la fibre optique 2 et de les réinjecter respectivement dans les n secondes fibres optiques $F_1$, $F_2$,..., $F_n$. Ce dispositif comprend deux guides de lumière superposés 6a, un guide inférieur de forte variation d'indice et un guide supérieur de plus faible variation d'indice.

Ces deux guides de lumière superposés 6a sont réalisés sur un substrat semiconducteur monocristallin 8a notamment en silicium et sont constitués par un empilement de quatre couches portant respectivement les références 10a, 11, 12a, 14a. Les couches médianes 11 et 12a correspondent respectivement aux couches guidantes du guide inférieur et du guide supérieur. La couche 11 présente un indice de réfraction supérieur à celui des couches 10a et 12a entrant dans la constitution du guide inférieur et la couche 12a présente un indice de réfraction supérieur à celui de la couche 10a et de la couche 14a entrant dans la constitution du guide de lumière supérieur.

Pour un substrat 8a en silicium, la couche 10a peut être réalisée en oxyde de silicium non dopé, obtenu par exemple par oxydation thermique du substrat à 800-850°C sous $10^6$ Pa ou à plus haute température, entre 1000°C et 1150°C sous pression atmosphérique ; elle présente par exemple un indice de réfraction de l'ordre de 1,58 pour une longueur d'onde de 0,8 µm et une épaisseur de 1 à 5 µm. La couche 11 est avantageusement réalisée en nitrure de silicium, matériau présentant un indice de réfraction élevé, de l'ordre de 2 pour la même longueur. Cette couche peut être déposée par exemple sur la couche 10a par un procédé de dépôt chimique en phase vapeur assisté ou non par plasma. Elle présente notamment une épaisseur allant de 0,01 µm à 0,2 µm.

La couche 12a peut être en oxyde de silicium dopé notamment au phosphore, au germanium ou au titane. Elle présente un indice de réfraction légèrement supérieur à celui de la couche 10a (supérieur de quelques $10^{-3}$) et une épaisseur de 2 à 10 µm. Elle peut être déposée sur la couche 11, par exemple par un procédé de dépôt chimique en phase vapeur, assisté ou non par plasma. La couche supérieure 14a peut également être une couche d'oxyde de silicium pur ou dopé par des éléments diminuant l'indice de réfraction de ladite couche, tel que le bore ou le fluor. Elle peut aussi être formée par un procédé de dépôt chimique en phase vapeur, assisté ou non par plasma. Elle présente un indice de réfraction de l'ordre de 1,45 pour une longueur d'onde de 0,8 µm, et une épaisseur allant de 1 à 6 µm.

Le guide supérieur de faible différence d'indice, une différence d'indice de $10^{-3}$ étant suffisante entre la couche guidante et les couches adjacentes, assure un bon couplage avec la fibre optique 2 transportant les différents signaux à séparer et avec les fibres optiques de sortie de ces différents signaux respectivement $F_1$, $F_2$,..., $F_n$. Ce guide supérieur est un guide monomode comme les fibres op-

tiques 2 et $F_i$, même pour une couche guidante 12a de 10 μm. Le transport du faisceau lumineux incident 4 dans le dispositif de multiplexage est assuré par le guide supérieur du dispositif.

Le guide inférieur à forte variation d'indice (par exemple 0,55) offre une plus grande possibilité de traitement des signaux lumineux que le guide à faible variation d'indice. En effet, il est aisé de réaliser dans la couche guidante 11 d'indice élevé ($Si_3N_4$) des composants optiques tels que des lentilles, des polariseurs etc... alors que ces éléments sont pratiquement impossibles à réaliser dans la couche guidante 12a de faible indice.

Ce dispositif de multiplexage comprend comme précédemment, un microguide d'entrée 16a, par exemple rectiligne, de même structure que la fibre optique 2 permettant de limiter les pertes de lumière à l'entrée du dispositif de multiplexage, une optique d'entrée 18a achromatique telle qu'un miroir parabolique servant à rendre parallèle le faisceau lumineux sortant du microguide 16a ainsi que n premiers réseaux $R'_1$, $R'_2$,..., $R'_n$ disposés en cascade, travaillant en régime de Bragg.

Comme précédemment, chaque réseau $R'_i$, i allant de 1 à n, sert à diffracter par exemple la partie du faisceau lumineux transportant le signal lumineux de longueur d'onde $\lambda_i$ et à transmettre le restant du faisceau lumineux en direction du réseau suivant $R'_{i+1}$. Ces réseaux $R'_1$, $R'_2$,..., $R'_n$ sont calculés pour coupler le mode du guide supérieur avec le mode du guide inférieur. Ils permettent donc, en plus de la sélection en longueur d'onde, de transférer le faisceau lumineux diffracté par eux du guide supérieur au guide inférieur et plus exactement de la couche guidante 12a en oxyde de silicium dopé à la couche guidante 11 en nitrure de silicium.

Du fait de ce transfert, d'un guide de lumière à l'autre, il est nécessaire d'associer chaque réseau $R'_i$ un réseau $T_i$, jouant le rôle d'une optique réflectrice, permettant de transférer les faisceaux lumineux diffractés par le réseau $R'_i$ du guide inférieur au guide supérieur, c'est-à-dire de la couche guidante 11 à la couche guidante 12a.

Les faisceaux lumineux réfléchis respectivement par les réseaux $T_1$, $T_2$,..., $T_n$ sont ensuite respectivement focalisés au moyen d'éléments optiques $M'_1$, $M'_2$,..., $M'_n$ tels que des miroirs achromatiques paraboliques, sur les secondes fibres optiques $F_1$, $F_2$,..., $F_n$ transportant respectivement les signaux lumineux de longueur d'onde $\lambda_1$, $\lambda_2$,..., $\lambda_n$. Des microguides de sortie respectivement $G'_1$, $G'_2$,..., $G'_n$, courbes, peuvent avantageusement être intercalés respectivement entre les optiques $M'_1$, $M'_2$,..., $M'_n$ et les fibres optiques $F_1$, $F_2$,..., $F_n$ pour favoriser le couplage du dispositif de multiplexage et desdites fibres optiques $F_1$, $F_2$,..., $F_n$.

Comme précédemment, les miroirs de sortie $M'_1$, $M'_2$,..., $M'_n$ et les microguides de sortie $G'_1$, $G'_2$,..., $G'_n$ permettent de faire sortir les faisceaux lumineux diffractés, transportant chacun un signal unique, perpendiculairement à une face clivée du substrat.

Les angles d'attaque ou angles de Bragg des réseaux $R'_1$, $R'_2$,..., $R'_n$ et des réseaux $T_1$, $T_2$,..., $T_n$ sont déterminés en fonction de l'indice effectif des deux guides dans lesquels sont réalisés les différents éléments optiques du dispositif de multiplexage ; ces indices effectifs dépendent de l'épaisseur et de l'indice de réfraction des couches constituant les guides.

Les différents éléments optiques de ce dispositif de multiplexage peuvent être réalisés, comme précédemment, en gravant partiellement au moyen d'une gravure ionique réactive les couches des deux guides avec $CHF_3$ ou $CF_4$ comme agent d'attaque. Les microguides 16a et $G'_1$ peuvent être obtenus en ne gravant que la couche supérieure 14a, les miroirs 18a et $M'_i$ en gravant les quatre couches 14a, 12a, 11 et 10a et les réseaux $R'_i$ et $T_i$ en gravant la couche supérieure 14a et partiellement la couche 12a (figure 4a).

Le dispositif de l'invention permet la séparation jusqu'à huit signaux lumineux de longueurs d'onde différentes tout en conservant des pertes totales de lumière acceptables, ce qui n'était pas possible avec les dispositifs de multiplexage de l'art antérieur.

La description donnée précédemment n'a bien entendu été donnée qu'à titre explicatif et non limitatif. En effet, toutes modifications dans les modes de réalisation du dispositif de multiplexage selon l'invention peuvent être envisagées sans pour autant sortir du cadre de l'invention. En particulier, les miroirs paraboliques, situés à l'entrée ou à la sortie du dispositif de multiplexage, peuvent être réalisés en ne gravant qu'une ou deux couches des guides de lumière. Par ailleurs, les différents réseaux peuvent être réalisés en ne gravant que la couche supérieure des guides de lumière ou bien en gravant les trois couches desdits guides. De même, les microguides peuvent être obtenus en gravant la couche d'oxyde de silicium dopé 12 ou 12a puis en recouvrant l'ensemble par la couche d'oxyde supérieure. Par ailleurs, l'épaisseur et la nature des différentes couches des guides de lumière peuvent être modifiées à condition toutefois que la couche guidante présente un indice de réfraction légèrement supérieur à celui des deux couches adjacentes du guide correspondant et que cette couche constitue une couche guidante monomode. De même, le substrat peut être réalisé en un autre matériau que le silicium tel que le verre, la première couche d'oxyde de silicium étant alors obtenue par un dépôt chimique en phase vapeur.

De plus, les différents réseaux ont été décrits comme diffractant le partie du faisceau lumineux ne transportant que l'un des signaux lumineux et transmettant la partie du faisceau lumineux contenant les autres signaux. Bien entendu, il est possible d'utiliser des réseaux transmettant la partie du faisceau lumineux ne contenant que l'un des signaux lumineux et diffractant la partie dudit faisceau contenant tous les autres signaux.

Enfin, le dispositif de l'invention a été décrit pour démultiplexer des signaux lumineux, c'est-à-dire pour séparer des signaux les uns des autres mais bien entendu, ce dispositif peut être aussi utilisé pour multiplexer ces mêmes signaux, c'est-à-dire pour former partir de n signaux lumineux de longueurs d'onde différentes un seul signal lumineux transportant ces signaux. Cette réversibilité du dispositif de l'invention est liée principalement à l'emploi des miroirs achromatiques paraboliques 18, $M_1$, ..., $M_n$. Dans ce cas chaque miroir $M_i$ ou $M'_i$ sert à transformer le faisceau incident de longueur d'onde $\lambda_i$ en un faisceau parallèle et le miroir 18 ou 18a sert à focaliser le faisceau résultant, issu du réseau $R_1$, contenant les n signaux lumineux.

## Revendications

1. Dispositif de démultiplexage en optique intégrée servant à séparer n signaux lumineux de longueur d'ondes différentes ($\lambda_1$, $\lambda_2$, ..., $\lambda_n$) constituant un faisceau lumineux incident (4) transporté par une première fibre optique (2) et à réinjecter respectivement dans n secondes fibres optiques ($F_1$, $F_2$, ..., $F_n$) les n signaux lumineux, ce dispositif formé de composants optiques réalisés dans au moins un guide de lumière plan (6, 6a) étant caractérisé en ce qu'il est réversible et en ce qu'il comprend, réalisés dans ledit guide:

  – un microguide d'entrée (16, 16a), destiné à recevoir le faisceau lumineux incident (4) sortant de la première fibre optique (2), ayant une structure voisine de celle de la première fibre optique,

  – un miroir parabolique d'entrée achromatique (18, 18a) servant à rendre parallèle (20) le faisceau lumineux incident (4) sortant du microguide d'entrée (16, 16a),

  – au moins n réseaux ($R_1$, $R_2$, ..., $R_n$, $R'_1$, $R'_2$, ..., $R'_n$) disposés en cascade, travaillant en régime de Bragg, chaque réseau ($R_i$, $R'_i$) servant à diffracter une première partie (22, 26) du faisceau lumineux (20) incident issu du miroir d'entrée et à transmettre une seconde partie (24, 28) dudit faisceau lumineux (20), l'une des deux parties (22, 26) ne transportant que l'un des n signaux lumineux ($\lambda_i$), l'autre partie (24, 28), transportant les autres signaux lumineux, étant envoyée en direction du réseau suivant ($R_{i+1}$, $R'_{i+1}$),

  – n miroirs paraboliques de sortie $M_1$, $M_2$, ..., $M_n$, $M'_1$, $M'_2$, ..., $M'_n$), achromatiques, associés aux n réseaux, chaque miroir de sortie ($M_i$) servant à focaliser la partie du faisceau lumineux (22, 26) ne transportant que l'un des n signaux lumineux ($\lambda_i$), et

  – n microguides de sortie ($G_1$, $G_2$, ..., $G_n$, $G'_1$, $G'_2$, ..., $G'_n$) associés aux n miroirs de sortie ($M_1$, $M_2$, ..., $M_n$, $M'_1$, $M'_2$, ..., $M'_n$), ces microguides de sortie, intercalés respectivement entre les n miroirs de sortie et les n secondes fibres optiques ($F_1$, $F_2$, ..., $F_n$), ayant respectivement une structure voisine de celle des secondes fibres optiques.

2. Dispositif de multiplexage selon la revendication 1, caractérisé en ce que les composants optiques sont formés dans un unique guide de lumière (6).

3. Dispositif de démultiplexage selon la revendication 1 ou 2, caractérisé en ce que les composants optiques étant formés dans deux guides de lumière superposés (6a), un guide inférieur de forte variation d'indice et un guide supérieur de plus faible variation d'indice dans lequel se propage le faisceau lumineux incident (4, 20), le dispositif de multiplexage comprend n premiers réseaux ($R'_1$, $R'_2$, ..., $R'_n$) servant chacun à diffracter une première partie du faisceau lumineux (4) et à transmettre une seconde partie dudit faisceau lumineux, l'une des deux parties ne transportant que l'un des n signaux lumineux ($\lambda_i$), l'autre partie, transportant les autres signaux lumineux, étant envoyée en direction du premier réseau suivant, la partie ne transportant que l'un des n signaux lumineux étant alors transférée du guide supérieur au guide inférieur, et n seconds réseaux ($T_1$, $T_2$, ..., $T_n$) associés auxdits premiers réseaux servant chacun à retransférer la partie du faisceau lumineux ne transportant que l'un des n signaux lumineux, du guide inférieur au guide supérieur.

4. Dispositif de démultiplexage selon la revendication 2, caractérisé en ce que l'unique guide de lumière (6) comprend, réalisées dans l'ordre sur un substrat en silicium (8), une première couche d'oxyde de silicium (10) non dopé, une seconde couche d'oxyde de silicium dopé (12) et une troisième couche d'oxyde (14) de silicium pur ou dopé avec un élément diminuant l'indice de réfraction de cette couche, le dopage du matériau de la seconde couche (12) étant tel que son indice de réfraction est supérieur à celui des première et troisième couches (10, 14).

5. Dispositif de démultiplexage selon la revendication 3, caractérisé en ce que les deux guides de lumière (6a) comprennent, réalisées dans l'ordre sur un substrat semiconducteur (8a) une première couche (10a), une seconde couche (11), une troisième couche (12a) et une quatrième couche (14a) de matériau, la troisième couche (12a) étant telle que son indice de réfraction est supérieur à celui des première et quatrième couches (10a, 14a) et inférieur à celui de la seconde couche (11), les première, seconde et troisième couches (10a, 11, 12a) formant le guide de lumière inférieur et les première, troisième et quatrième couches (10a, 12a, 14a) formant le guide de lumière supérieur.

6. Dispositif de démultiplexage en optique intégrée servant à séparer n signaux lumineux de longueur d'ondes différentes ($\lambda_1$, $\lambda_2$, ..., $\lambda_n$) constituant un faisceau lumineux incident (4) transporté par une première fibre optique (2) et à réinjecter respectivement dans n secondes fibres optiques ($F_1$, $F_2$, ..., $F_n$) les n signaux lumineux, caractérisé en ce que les composants optiques constituant ce dispositif sont formés dans deux guides de lumière plans superposés (6a), un guide inférieur de forte variation d'indice et un guide supérieur de plus faible variation d'indice dans lequel se propage le faisceau lumineux incident (4, 20), en ce que le dispositif est réversible et comprend:

  – une optique d'entrée achromatique (18a) servant à rendre parallèle (20) le faisceau lumineux incident (4) sortant de la première fibre optique (2),

— n premiers réseaux (R'₁, R'₂, ..., R'ₙ) disposés en cascade, travaillant en régime de Bragg, chaque réseau (R'ᵢ) servant à diffracter une première partie (22, 26) du faisceau lumineux (20) incident issu de l'optique d'entrée et à transmettre une seconde partie (24, 28) dudit faisceau lumineux (20), l'une des deux parties (22, 26) ne transportant que l'un des n signaux lumineux (λᵢ), l'autre partie (24, 28), transportant les autres signaux lumineux, étant envoyée en direction du premier réseau suivant (R'ᵢ₊₁), la partie ne transportant que l'un des n signaux lumineux étant alors transférée du guide supérieur au guide inférieur,

— n seconds réseaux (T₁, T₂, ..., Tₙ) associés auxdits premiers réseaux servant chacun à retransférer la partie du faisceau lumineux ne transportant que l'un des n signaux lumineux, du guide inférieur au guide supérieur,

— n optiques de sortie (M'₁, M'₂, ..., M'ₙ), associées aux n seconds réseaux, chaque optique de sortie (Mᵢ) servant à focaliser la partie du faisceau lumineux (22, 26) ne transportant que l'un des n signaux lumineux (λᵢ).

7. Dispositif de démultiplexage selon la revendication 6, caractérisé en ce que l'optique d'entrée (18, 18a) est un miroir parabolique.

8. Dispositif de démultiplexage selon la revendication 6 ou 7, caractérisé en ce que les optiques de sortie (M'₁, M'₂, ..., M'ₙ) sont des miroirs paraboliques achromatiques.

9. Dispositif de démultiplexage selon l'une quelconque des revendications 6 à 8, caractérisé en ce qu'il comprend un microguide d'entrée (16a), intercalé entre la première fibre optique (2) et l'optique d'entrée (18a), ayant une structure voisine de celle de la première fibre optique.

10. Dispositif de démultiplexage selon l'une quelconque des revendications 6 à 9, caractérisé en ce qu'il comprend n microguides de sortie (G'₁, G'₂, ..., G'ₙ) associés aux n optiques de sortie (M'₁, M'₂, ..., M'ₙ), ces microguides de sortie, intercalés respectivement entre les n optiques de sortie et les n secondes fibres optiques (F₁, F₂, ..., Fₙ), ayant respectivement une structure voisine de celle des secondes fibres optiques.

11. Dispositif de démultiplexage selon l'une quelconque des revendications 1 à 10, caractérisé en ce que la partie (22, 26) ne transportant que l'un des n signaux lumineux est la partie du faisceau lumineux diffractée par le réseau correspondant.

12. Dispositif de démultiplexage selon la revendication 1 ou 10, caractérisé en ce que les microguides de sortie (G₁, G₂, ..., Gₙ, G'₁, G'₂, ..., G'ₙ) sont courbes.

13. Dispositif de démultiplexage selon l'une quelconque des revendications 1 à 12, caractérisé en ce que les éléments optiques sont formés par gravure d'au moins une partie du ou des guides de lumière (6, 6a).

14. Dispositif de démultiplexage selon la revendication 5 ou 6, caractérisé en ce que le substrat (8) est en silicium, la première couche (10a) en oxyde de silicium non dopé, la seconde couche (11) en nitrure de silicium, la troisième couche (12a) en oxyde de silicium dopé et la quatrième couche (14a) en oxyde de silicium pur ou dopé avec un élément diminuant son indice de réfraction.

15. Dispositif de démultiplexage selon la revendication 4 ou 14, caractérisé en ce que la couche d'oxyde de silicium dopé (12, 12a) est dopée au phosphore, au germanium ou au titane.

16. Dispositif de démultiplexage selon la revendication 4, caractérisé en ce que la première fibre optique (2) et les n secondes fibres optiques (F₁, F₂, ..., Fₙ) étant des fibres optiques monomodes, l'unique guide de lumière (6) est un guide monomode.

17. Dispositif de démultiplexage selon la revendication 5 ou 6, caractérisé en ce que la première fibre optique (2) et les n secondes fibres optique (F₁, F₂, ..., Fₙ) étant des fibres optiques monomodes, le guide de lumière supérieur est un guide monomode.

**Claims**

1. Demultiplexer in integrated optics for separating n light signals of different wavelengths ($\lambda_1$, $\lambda_2$, ..., $\lambda_n$) constituting an incident light beam (4) transmitted by a first optical fibre (2) and for respective reinjection in to n second optical fibres (F₁, F₂, ..., Fₙ) of the n light signals, said demultiplexer formed from optical components produced in at least one planar light guide (6, 6a) being characterized in that it is reversible and also comprises in said guide an input microguide (16, 16a) for receiving the incident light beam (4) leaving the first optical fibre (2) and having a structure similar to that of the first optical fibre, an achromatic input parabolic mirror (18, 18a) for rendering parallel (20) the incident light beam (4) leaving the input microguide (16, 16a), at least n gratings (R₁, R₂, ..., Rₙ, R'₁, R'₂, ..., R'ₙ) arranged in cascade form and operating under Bragg conditions, each grating (Rᵢ, R'ᵢ) being used for defracting a first part (22, 26) of the incident light beam (20) from the input mirror and for transmitting the second part (24, 28) of said light beam (20), one of the two parts (22, 26) only carrying one of the n light signals (λᵢ), the other part (24, 28) carrying the other light signals being transmitted in the direction of the following grating (Rᵢ₊₁, R'ᵢ₊₁), n achromatic output parabolic mirrors (M₁, M₂, ..., Mₙ, M'₁, M'₂, ..., M'ₙ), associated with the n networks, each output mirror (Mᵢ) being used for focussing that part of the light beam (22, 26) only carrying one of the n light signals (λᵢ) and n output microguides (G₁, G₂, ..., Gₙ, G'₁, G'₂, ..., G'ₙ) associated with the n output mirrors (M₁, M₂, ..., Mₙ, M'₁, M'₂, ..., M'ₙ), said output microguides respectively inserted between the n output mirrors and the n second optical fibres (F₁, F₂, ..., Fₙ), respectively having a structure close to that of the second optical fibres.

2. Demultiplexer according to claim 1, characterized in that the optical components are formed in a single light guide (6).

3. Demultiplexer according to claims 1 or 2, characterized in that the optical components are formed in two superimposed light guides (6a), a lower guide with a high index variation and an upper guide with a lower index variation in which the incident light beam (4, 20) propagates, the multiplexing device comprising n first gratings (R'₁, R'₂, ..., R'ₙ) each being used for diffracting a first part of the light beam (4) and for transmitting the second part of said light beam, one of the two parts only carrying one of the n light signals (λᵢ), whilst the other part, carrying the other light signals, is transmitted in the direction of the following first grating, the part only carrying one of the n light signals then being transferred from the upper guide to the lower guide, and n second gratings (T₁, T₂, ..., Tₙ) associated with said first gratings and each being used for retransferring that part of the light beam only carrying one of the n light signals from the lower guide to the upper guide.

4. Demultiplexer according to claim 2, characterized in that the single light guide (6) comprises, produced in order on a silicon substrate (8), a first undoped silicon oxide layer (10), a second doped silicon oxide layer (12) and a third silicon oxide layer (14) either in the pure state or doped with an element reducing the refractive index of said layer, the doping of the material of the second layer (12) being such that its refractive index is above that of the first and third layers (10, 14).

5. Demultiplexer according to claim 3, characterized in that the two light guides (6a) comprise, produced in order on a semiconductor substrate (8a), a first layer (10a), a second layer (11), a third layer (12a) and a fourth layer (14a) of material, the third layer (12a) being such that its refractive index is higher than that of the first and fourth layers (10a, 14a) and lower than that of the second layer (11), the first, second and third layers (10a, 11, 12a) forming the lower light guide and the first, third and fourth layers (10a, 12a, 14a) forming the upper light guide.

6. Demultiplexer in integrated optics used for separating n light signals of different wavelengths (λ₁, λ₂, ..., λₙ) constituting an instant light beam (4) transmitted by a first optical fibre (2) and the respective reinjection into the n second optical fibres (F₁, F₂, ..., Fₙ) of the n light signals, characterized in that the optical components constituting said device are formed in two superimposed, planar light guides (6a), namely a lower guide with a high index variation and an upper guide with a smaller index variation in which propagates the incident light beam (4, 20) and in that said demultiplexer is reversible and comprises an achromatic input optics (18a) used for rendering parallel (20) the incident light beam (4) leaving the first optical fibre (2), n first gratings (R'₁, R'₂, ..., R'ₙ) arranged in cascade form and operating under Bragg conditions, each grating (R'ᵢ) being used for diffracting a first part (22, 26) of the incident light beam (20) leaving the input optics and transmitting a second part (24, 28) of said light beam (20), one of the two parts (22, 26) only carrying one of the n light signals (λᵢ), the other part (24, 28) carrying the other light signals and is transmitted in the direction of the first following grating (R'ᵢ₊₁), the part only carrying one of the n light signals then being transferred from the upper guide to the lower guide, n second gratings (T₁, T₂, ..., Tₙ) associated with said first grating serving in each case to retransfer that part of the light beam only carrying one of the n light signals from the lower guide to the upper guide and n output optics, (M'₁, M'₂, ..., M'ₙ) associated with the n second gratings, each output optics (Mᵢ) being used for focusing the part of the light beam (22, 26) only carrying one of the n light signals (λᵢ).

7. Demultiplexer according to claim 6, characterized in that the input optics (18, 18a) is a parabolic mirror.

8. Demultiplexer according to claim 6 or 7, characterized in that the output optics (M'₁, M'₂, ..., M'ₙ) are achromatic parabolic mirrors.

9. Demultiplexer according to any one of the claims 6 to 8, characterized in that it comprises an input microguide (16a) placed between the first optical fibre (2) and the input optics (18a) and having a structure similar to that of the first optical fibre.

10. Demultiplexer according to one of the claims 6 to 9, characterized in that it comprises n output microguides (G'₁, G'₂, ..., G'ₙ) associated with n output optics (M'₁, M'₂, ..., M'ₙ), said output microguides, inserted respectively between the n output optics and the n second optical fibres, (F₁, F₂, ..., Fₙ) respectively having a structure similar to that of the second optical fibres.

11. Demultiplexer according to any one of the claims 1 to 10, characterized in that that part (22, 26) only carrying one of the n like signals is the part of the light beam diffracted by the corresponding grating.

12. Demultiplexer according to claims 1 or 10, characterized in that the output microguides (G₁, G₂, ..., Gₙ, G'₁, G'₂, ..., G'ₙ) are curved.

13. Demultiplexer according to any one of the claims 1 to 12, characterized in that the optical elements are formed by etching at least part of the light guide or guides (6a, 6).

14. Demultiplexer according to claims 5 or 6, characterized in that the substrate (8) is made from silicon, the first layer (10a) of undoped silicon oxide, the second layer (11) of silicon nitride, the third layer (12a) of doped silicon oxide and the fourth layer (14a) of silicon oxide in either the pure state or doped with an element reducing its refractive index.

15. Demultiplexer according to claims 4 or 14, characterized in that the doped silicon oxide layer (12, 12a) is doped with phosphorus, germanium or titanium.

16. Demultiplexer according to claim 4, characterized in that the first optical fibre (2) and the n second optical fibre (F₁, F₂, ..., Fₙ) are monomode optical fibres, the single light guide (6) being a monomode guide.

17. Demultiplexer according to claims 5 or 6, characterized in that the first optical fibre (2) and the n second optical fibres (F₁, F₂, ..., Fₙ) are monomode optical fibres, the upper light guide being a monomode guide.

**Patentansprüche**

1. Demultiplexvorrichtung in integrierter Optik, die dazu dient, n Lichtsignale verschiedener Wellenlänge ($\lambda_1$, $\lambda_2$, ..., $\lambda_n$), die ein einfallendes Lichtbündel (4), das von einer optischen Faser (2) transportiert wird, zu trennen und die n Lichtsignale jeweils in n zweite optische Fasern ($F_1$, $F_2$, ..., $F_n$) einzuspeisen, wobei diese Vorrichtung, die aus optischen, in wenigstens einem ebenen Lichtleiter (6, 6a) angeordneten Komponenten besteht, dadurch gekennzeichnet ist, daß sie umkehrbar ist und daß sie in dem Lichtleiter umfaßt:
— einen Mikroeingangsleiter (16, 16a), der dazu bestimmt ist, das einfallende Lichtbündel (4), das aus der ersten optischen Faser (2) austritt, aufzunehmen und das eine der ersten optischen Faser ähnliche Struktur besitzt,
— einen achromatischen Eingangsparabolspiegel (18, 18a), der dazu dient, das aus dem Mikroeingangsleiter (16, 16a) austretende, einfallende Lichtbündel (4) parallel (20) zu machen,
— wenigstens n Gitter ($R_1$, $R_2$, ..., $R_n$, $R_1'$, $R_2'$, ..., $R_n'$), die in einer Kaskade angeordnet sind und im Braggbereich arbeiten, wobei jedes Gitter ($R_i$, $R_i'$) dazu dient, einen ersten Teil (22, 26) des von dem Eingangsspiegel herrührenden, einfallenden Lichtbündels (20) zu beugen und einen zweiten Teil (24, 28) dieses Lichtbündels (20) weiterzuleiten, wobei einer (22, 26) der beiden Teile nur eines der n Lichtsignale ($\lambda_i$) trägt, während der andere Teil (24, 28) die anderen Lichtsignale trägt, die in Richtung des folgenden Gitters ($R_{i+1}$, $R'_{i+1}$) geleitet werden
— n achromatische Ausgangsparabolspiegel ($M_1$, $M_2$, ..., $M_n$, $M_1'$, $M_2'$, ..., $M_n'$), die mit den n Gittern verbunden sind, wobei jeder Ausgangsspiegel ($M_i$) dazu dient, den Teil (22, 26) des Lichtbündels zu fokussieren, der nur eines der n Lichtsignale trägt,
— n Mikroausgangsleiter ($G_1$, $G_2$, ..., $G_n$, $G_1'$, $G_2'$, ..., $G_n'$) die mit den n Ausgangsspiegeln ($M_1$, $M_2$, ..., $M_n$, $M_1'$, $M_2'$, ..., $M_n'$) verbunden sind, wobei diese Mikroausgangsleiter, die zwischen den n Ausgangsspiegeln und den n zweiten optischen Fasern ($F_1$, $F_2$, ..., $F_n$) angeordnet sind, jeweils eine der zweiten optischen Fasern ähnliche Struktur besitzen.

2. Demultiplexvorrichtung nach Anspruch 1, dadurch gekennzeichnet, daß die optischen Komponenten in einem einzigen Lichtleiter (6) gebildet sind.

3. Demultiplexvorrichtung nach Anspruch 1 oder 2, dadurch gekennzeichnet, daß die optischen Komponenten in zwei übereinanderliegenden Lichtleitern (6a) gebildet sind, wobei ein unterer Lichtleiter eine starke Variation des Brechungsindex aufweist und ein oberer Lichtleiter, in dem sich das einfallende Lichtbündel (4, 20) bewegt, eine geringere Variation des Brechungsindex aufweist, wobei die Multiplexvorrichtung n erste Gitter ($R_1'$, $R_2'$, ..., $R_n'$), die jeweils zu Beugen eines ersten Teils (4) des Lichtbündels dienen und zum Weiterleiten eines zweiten Teils des Lichtbündels dienen, wobei einer der beiden Teile nur eines der anderen Lichtsignale ($\lambda_i$) trägt, während der andere Teil, der die anderen Lichtsignale trägt, in Richtung des folgenden, ersten Gitters geleitet wird, während der Teil, der nur eins der n Lichtsignale trägt, dann vom oberen zum unteren Leiter geleitet wird, und n zweite Gitter ($T_1$, $T_2$, ..., $T_n$) umfaßt, die mit den ersten Gittern verbunden sind und die dazu dienen, den Teil des Lichtbündels, der nur eines der n Lichtsignale trägt, vom unteren zum oberen Leiter zu leiten.

4. Demultiplexvorrichtung nach Anspruch 2, dadurch gekennzeichnet, daß der einzige Lichtleiter (6) der Reihe nach auf einem Siliziumsubstrat (8) umfaßt: eine erste Schicht (10) aus undotiertem Siliziumoxyd, eine zweite Schicht (12) aus dotiertem Siliziumoxyd und eine dritte Schicht (14) aus Siliziumoxyd, das rein ist oder mit einem Element dotiert ist, das den Brechungsindex dieser Schicht verringert, wobei die Dotierung des Materials der zweiten Schicht (12) derart ist, daß ihr Brechungsindex höher ist als der der ersten und dritten Schicht (10, 14).

5. Demultiplexvorrichtung nach Anspruch 3, dadurch gekennzeichnet, daß die beiden Lichtleiter (6a) der Reihe nach auf einem Halbleitersubstrat (8a) umfassen: eine erste Schicht (10a), eine zweite Schicht (11), eine dritte Schicht (12a) und eine vierte Schicht (14a), wobei die dritte Schicht (12a) derart ist, daß ihr Brechungsindex höher ist als der der ersten und vierten Schicht (10a, 14) und niedriger ist als der der zweiten Schicht (11), wobei die erste, zweite und dritte Schicht (10a, 12a, 11) den unteren Lichtleiter bilden, während die erste, dritte und vierte Schicht (10a, 12a, 14a) den oberen Lichtleiter bilden.

6. Demultiplexvorrichtung in integrierter Optik, die dazu dient, n Lichtsignale verschiedener Wellenlänge ($\lambda_1$, $\lambda_2$, ..., $\lambda_n$), die ein einfallendes Lichtbündel (4), das von einer optischen Faser (2) transportiert wird, zu trennen und die n Lichtsignale jeweils in n zweite optische Fasern ($F_1$, $F_2$, ..., $F_n$) einzuspeisen, dadurch gekennzeichnet, daß die optischen Komponenten, die diese Vorrichtung bilden in zwei ebenen, übereinanderliegenden Lichtleitern (6a) gebildet sind, wobei ein unterer Leiter eine starke Variation des Brechungsindex und ein oberer Leiter, in dem sich das einfallende Lichtbündel fortpflanzt, eine schwächere Variation des Brechungsindex aufweist, wobei diese Vorrichtung umkehrbar ist und umfaßt:
— eine achromatische Eingangsoptik (18a), die dazu dient, das aus der ersten optischen Faser (2) austretende, einfallende Lichtbündel (4) parallel (20) zu machen,
— n erste Gitter ($R_1'$, $R_2'$, ..., $R_n'$), die in einer Kaskade angeordnet sind und im Braggbereich arbeiten, wobei jedes Gitter ($R_i$, $R_i'$) dazu dient, einen ersten Teil (22, 26) des von der Eingangsoptik herrührenden, einfallenden Lichtbündels (20) zu beugen und einen zweiten Teil (24, 28) dieses Lichtbündels (20) weiterzuleiten, wobei einer (22, 26) der beiden Teile nur eines der n Lichtsignale ($\lambda_i$) trägt, während der andere Teil (24, 28) die anderen Lichtsignale trägt, die in Richtung des folgenden Gitters ($R'_{i+1}$) geleitet werden, wo-

bei der Teil, der nur das eine der n Signale trägt, dann vom oberen Leiter zum unteren Leiter gebracht wird;

– n zweite Gitter ($T_1$, $T_2$, ..., $T_n$), die mit den n ersten Gittern verbunden sind, wobei jedes dazu dient, den Teil (22, 26) des Lichtbündels, der nur eines der n Lichtsignale trägt, vom unteren Leiter zum oberen Leiter zu leiten;

– n Ausgangsoptiken ($M_1'$, $M_2'$, ..., $M_n'$), die mit den n Ausgangsspiegeln und den n zweiten Spiegeln verbunden sind, wobei jede Ausgangsoptik ($M_i$) dazu dient, den Teil des Lichtbündels (22, 26) zu fokussieren, den nur eines der optischen Signale ($\lambda_1$) trägt.

7. Demultiplexvorrichtung nach Anspruch 6, dadurch gekennzeichnet, daß die Eingangsoptik (18, 18a) ein Parabolspiegel ist.

8. Demultiplexvorrichtung nach Anspruch 6 oder 7, dadurch gekennzeichnet, daß die Ausgangsoptiken ($M_1'$, $M_2'$, ..., $M_n'$) achromatische Parabolspiegel sind.

9. Demultiplexvorrichtung nach einem der Ansprüche 6 bis 8, dadurch gekennzeichnet, daß sie einen Mikroeingangsleiter (16a) umfaßt, der zwischen der ersten optischen Faser (2) und der Eingangsoptik (18a) angeordnet ist und eine der Struktur der ersten optischen Faser ähnliche Struktur hat.

10. Demultiplexvorrichtung nach einem der Ansprüche 6 bis 9, dadurch gekennzeichnet, daß sie n Mikroausgangsleiter ($G_1'$, $G_2'$, ..., $G_n'$) die mit den n Ausgangsspiegeln ($M_1'$, $M_2'$, ..., $M_n'$) verbunden sind, umfaßt, wobei diese Mikroausgangsleiter, die zwischen den n Ausgangsoptiken und den n zweiten optischen Fasern ($F_1$, $F_2$, ..., $F_n$) angeordnet sind, jeweils eine der zweiten optischen Fasern ähnliche Struktur besitzen.

11. Demultiplexvorrichtung nach einem der Ansprüche 1 bis 10, dadurch gekennzeichnet, daß der Teil (22, 26), der nur eines der n Lichtsignale trägt, der durch das entsprechende Gitter gebeugte Teil des Lichtbündels ist.

12. Demultiplexvorrichtung nach einem der Ansprüche 1 bis 10, dadurch gekennzeichnet, daß die Mikroausgangsleiter ($G_1$, $G_2$, ..., $G_n$, $G_1'$, $G_2'$, ..., $G_n'$) gebogen sind.

13. Demultiplexvorrichtung nach einem der Ansprüche 1 bis 12, dadurch gekennzeichnet, daß die optischen Elemente durch Ätzen wenigstens eines Teils der oder des Lichtleiter(s) (6, 6a) gebildet sind.

14. Demultiplexvorrichtung nach Anspruch 5 oder 6, dadurch gekennzeichnet, daß das Substrat (8) aus Silizium, die erste Schicht (10a) aus nicht dotiertem Siliziumoxyd, die zweite Schicht (11) aus Siliziumnitrid, die dritte Schicht (12a) aus dotiertem Siliziumoxyd und die vierte Schicht (14a) aus Siliziumoxyd besteht, das rein ist oder mit einem Element dotiert ist, das seinen Brechungsindex verringert.

15. Demultiplexvorrichtung nach Anspruch 4 oder 14, dadurch gekennzeichnet, daß die dotierte Siliziumoxydschicht (12, 12a) mit Phosphor, Germanium oder Titan dotiert ist.

16. Demultiplexvorrichtung nach Anspruch 4, dadurch gekennzeichnet, daß die erste optische Faser (2) und die n zweiten optischen Fasern ($F_1$, $F_2$, ..., $F_n$) optische Monomodefasern sind und daß der einzige Lichtleiter (6) ein Monomodeleiter ist.

17. Demultiplexvorrichtung nach Anspruch 5 oder 6, dadurch gekennzeichnet, daß die erste optische Faser (2) und die n zweiten optischen Fasern ($F_1$, $F_2$, ..., $F_n$) optische Monomodefasern sind und daß der obere Lichtleiter ein Monomodeleiter ist.

FIG. 1

EP 0 196 948 B1

FIG. 2

FIG. 3

FIG. 4 a

FIG. 4 b

FIG. 5

EP 0 196 948 B1